# NEUE EUROPÄISCHE PATENTSCHRIFT

(11) **EP 2 024 710 B2**
(45) Veröffentlichungstag und Bekanntmachung des Hinweises auf die Entscheidung über den Einspruch: **07.03.2018**
(45) Hinweis auf die Patenterteilung: 22.08.2012
(21) Anmeldenummer: 07720175.4
(22) Anmeldetag: 04.06.2007
(51) Int. Cl.: G01L 19/06, G01D 11/24

(54) **MEMBRANSCHUTZ FÜR EINEN SENSOR MIT EINER MEMBRANE UND SENSOR MIT MEMBRANE UND MEMBRANSCHUTZ**
MEMBRANE PROTECTION FOR A SENSOR HAVING A MEMBRANE, AND SENSOR HAVING A MEMBRANE AND MEMBRANE PROTECTION
PROTEGE MEMBRANE POUR UN CAPTEUR MUNI D'UNE MEMBRANE ET CAPTEUR MUNI D'UNE MEMBRANE ET PROTEGE MEMBRANE

(30) Priorität: 07.06.2006 CH 923062006
(43) Veröffentlichungstag der Anmeldung: 18.02.2009
(73) Patentinhaber: Kistler Holding AG, 8408 Winterthur (CH)
(72) Erfinder: BRECHBÜHL, Stefan, CH-8570 Weinfelden (CH); WOLFER, Peter, CH-8451 Kleinandelfingen (CH)
(86) Internationale Anmeldenummer: PCT/CH2007/000278
(87) Internationale Veröffentlichungsnummer: WO 2007/140641

(56) Entgegenhaltungen:
- AT-U1- 2 036
- DE-A1- 3 926 245
- DE-A1-102004 044 982
- DE-U1- 8 903 667
- GB-A- 2 217 846
- GB-A- 2 220 116
- US-A1- 2004 237 629
- US-B1- 6 197 172
- US-B1- 6 435 017
- US-B1- 6 614 911

## Beschreibung

### Technisches Gebiet

Die Erfindung betrifft einen Membranschutz für einen in eine Bohrung eines Einbauteils einschraubbaren Sensor mit einer Membrane sowie einen solchen Sensor umfassend einen Membranschutz nach den Oberbegriffen der unabhängigen Patentansprüche.

### Stand der Technik

Viele Sensoren haben eine empfindliche Membrane, welche in den Umgebungen, in denen sie eingesetzt werden, leicht beschädigt werden können. Eine solche Beschädigung kann beispielsweise durch eine mechanische Berührung hervorgerufen werden oder durch Flammen in einem Verbrennungsmotor. Schon der Einbau und/oder Ausbau eines Sensors kann die Membrane beschädigen. Frontdichtende Drucksensoren werden gar an der Membrane an einem Anschlag eines Einbauteils geklemmt, was eine starke mechanische Belastung für die Membrane bedeuten kann. Zum Schutz der Membranen sind daher Membranschütze vorgesehen.

Ein bekannter Membranschutz besteht aus einem metallischen Gitter, das auf ein Aussengewinde einer Sensorspitze aufgeschraubt werden kann. Dies verbreitert die Sensorspitze aber, was oft nachteilig ist. Ein anderer Nachteil besteht darin, dass der Membranschutz beim Ausbau des Sensors versehentlich abgeschraubt werden kann und folgedessen in einem Einbauteil zurückbleibt.

Eine andere bekannte Lösung besteht aus einem flachen Gitter, das in eine Einbaubohrung gegeben wird, bevor der Sensor eingebaut wird. Nachteilig an dieser Anordnung ist aber, dass der Membranschutz nach dem Ausbau des Sensors mühselig aus der Bohrung entnommen werden muss.

In der US 2004/0237629 sowie in der GB 2217846 werden Drucksensoren mit integrierten Hitzeschildern beschrieben, die fest am Sensor angebracht, vorzugsweise angeschweisst sind. Sie sind somit nicht demontierbar und nicht austauschbar, sollten sie beschädigt worden sein.

In der US 6197172 ist ein chemischer Sensor beschrieben, welcher eine zweite, vordere Membran aufweist, welche von innen her an einer Membranhülse befestigt ist. Diese die Membran umfassende Membranhülse wird schliesslich über die Sensorspitze gestülpt und rückseitig an diesem angebracht, vorzugsweise angeklebt. Durch eine solche Anbringung wird der Aussendurchmesser der Sensorspitze vergrössert.

Aufgabe der vorliegenden Erfindung ist es, einen Sensor mit einem Membranschutz für eine Membrane des Sensors zu beschreiben, der den Aussendurchmesser des Sensors nicht vergrössert und der sich leicht aus einer Bohrung, in welcher der Sensor eingebaut wird, entfernen lässt.

Die Aufgabe wird gelöst durch die Kennzeichen des unabhängigen Patentanspruchs.

Die der Erfindung zugrunde liegende Idee besteht darin, dass der Membranschutz mit einem Clipsystem inwändigen am Frontbereich eines Sensors befestigbar ist und somit mit dem Sensor zusammen eine Einheit bildet. Weitere bevorzugte Ausführungsformen sind in den Unteransprüchen beschrieben.

### Kurze Beschreibung der Zeichnungen

Im Folgenden wird die Erfindung unter Beizug der Zeichnungen näher erklärt. Es zeigen
- Fig. 1: eine schematische perspektivische Darstellung eines Sensors mit einem Membranschutz nach dem Stand der Technik;
- Fig. 2: eine schematische perspektivische Darstellung eines erfindungsgemässen Sensors mit einem erfindungsgemässen Membranschutz;
- Fig. 3: eine schematische perspektivische Darstellung eines weiteren erfindungsgemässen Membranschutzes;
- Fig. 4: einen Schnitt eines erfindungsgemässen Sensors mit Membranschutz im eingebauten Zustand;
- Fig. 5: einen Schnitt eines alternativen erfindungsgemässen Sensors mit Membranschutz im eingebauten Zustand.

### Wege zur Ausführung der Erfindung

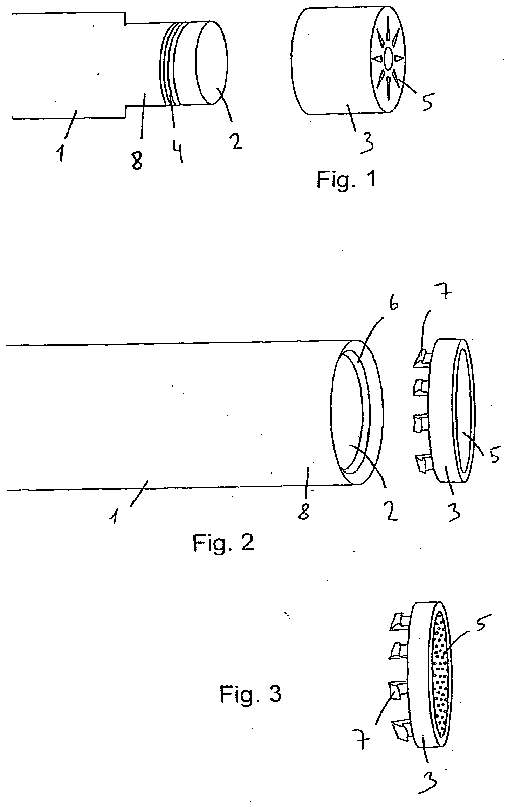

Die Fig. 1 zeigt in einer schematischen perspektivischen Darstellung einen Frontbereich 8 eines Sensors 1 mit einer Membrane 2 und mit einem auf einem Aussengewinde 4 aufschraubbaren Membranschutz 3 mit Öffnungen 5. Nach einer Beschädigung des Membranschutzes 3 kann dieser sorgfältig ausgetauscht werden, ohne dass die Membrane 2 darunter leidet.

Fig. 2 zeigt wiederum einen Frontbereich 8 eines Sensors 1 mit einer Membrane 2 im Frontbereich 8. Der Frontbereich 8 weist im Inneren eine erfindungsgemässe Rille 6 auf, in welche ein Clipsystem 7 eingreifen kann. Ein solches Clipsystem 7 ist an einem entsprechenden erfindungsgemässen Membranschutz 3 dargestellt. Es besteht beispielsweise aus elastisch am Membranschutz 3 angebrachten einzelnen Zähnen 7. Diese können zum Befestigen von innen in die Rille 6 eines Sensors 1 eingreifen. Ein Sensor 1 mit einem solchen erfindungsgemässen Membranschutz 3 lässt sich leicht in eine Bohrung 9 eines Einbauteils 10 montieren, wenn der Aussenradius des Membranschutzes 3 nicht grösser ist als der Aussenradius des Sensors 1.

Der in Fig. 2 dargestellte Membranschutz 3 weist eine zentrale Öffnung 5 auf, durch die ein Medium hindurchtreten kann. Dieses Medium ist Träger der zu messenden Informationen und überträgt somit physikalische Grössen wie Schallwellen, Druck Temperatur und/oder andere Grössen.

In der Fig. 3 ist eine weitere Ausführungsform eines erfindungsgemässen Membranschutzes 3 angegeben. Im Gegensatz zum ersten dargestellten Membranschutz 3 weist diese Ausführung eine Vielzahl von Öffnungen 5 auf, durch die das Medium mit den Informationen hindurchtreten kann. Je nach Anwendung bietet diese Ausführung den besseren Schutz, beispielsweise als Flammschutz.

Der Membranschutz 3 ist vorteilhafterweise aus einem Material hergestellt, das hitzebeständig ist, um geeignet zu sein für den Einsatz des zu verwendenden Sensors 1, beispielsweise in einem Brennraum. Eine Temperaturbeständigkeit bis 500°C ist von Vorteil. Eine Vielzahl bekannter Metalle oder Legierungen erfüllen diesen Zweck.

Eine Oberflächenbeschichtung des Membranschutzes 3 hat den Vorteil, dass eine Verrussung, verursacht beispielsweise durch einen Einsatz in einem Brennraum, stark verringert wird. Dies ist umso mehr der Fall, wenn der Membranschutz 3, wie in Fig. 3 dargestellt, eine Vielzahl von Öffnungen 5 aufweist.

Der erfindungsgemässe Membranschutz 3 lässt sich einfach und ohne Werkzeug im Frontbereich 8 eines Sensors 1 montieren und wieder davon demontieren, ohne dass dabei die Membrane 2 beschädigt wird. Vorteilhaft an dieser Ausführungsform ist die Grösse, insbesondere, dass der Durchmesser des Membranschutzes 3 nicht grösser ist als der Durchmesser des Frontbereiches 8 des Sensors 1. Somit kann ein Sensor 1 mit einem solchen Membranschutz 3 in eine passende Bohrung eingefügt werden, wobei bei einer Entnahme des Sensors 1 der Membranschutz 3 automatisch mit dem Sensor 1 zusammen entnommen wird.

Vorzugsweise ist der Membranschutz 3 drehbar im Frontbereich 8 des Sensors 1 anbringbar. Dadurch wird die Belastung auf die Membrane 2 bei einer Montage verringert, wenn der Sensor 1 eingeschraubt wird.

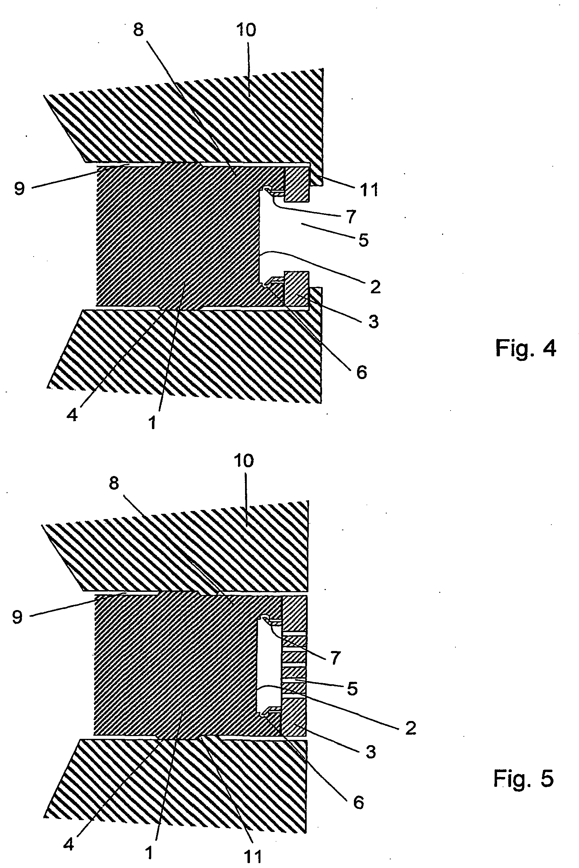

Fig. 4 und 5 zeigen erfindungsgemässe Sensoren 1 im eingebauten Zustand. Fig. 4 zeigt einen frontdichtenden Sensor 1, beispielsweise einen Drucksensor. Er wird an einem Gewinde 4 in einer Bohrung 9 eines Einbauteils 10 eingeschraubt und stützt sich stirnflächig an einem dafür vorgesehenen Anschlag 11 ab. Damit an dieser Fläche zum Anschlag 11 beim Einschrauben eine Dichtwirkung eintritt, muss die Stirnfläche des Sensors 1 sehr plan sein. Da erfindungsgemäss der Membranschutz 3 zwischen dem Sensor 1 und dem Anschlag 11 angeordnet ist, muss dieser Membranschutz 3 beidseitig abdichten, zum Sensor 1 hin und zum Anschlag 11. Der Membranschutz 3 verhindert, dass beim mehrmaligen Ein- und Ausschrauben des Sensors 1 dessen Stirn mechanisch beschädigt wird.

In der Fig. 5 ist ein schulterdichtender erfindungsgemässer Sensor 1 im eingebauten Zustand dargestellt. In dieser Ausführungsform ist der Anschlag 11 nicht stirnseitig am Sensor 1 angebracht sondern weiter hinten, beispielsweise im Bereich des Gewindes 4. Der Membranschutz 3 ist hier bündig mit dem Ende der Bohrung 9. Dank dem Clipsystem 7 ist er mit dem Sensor verbunden und fällt nicht durch die Bohrung, wie es ein nicht befestigter Membranschutz nach dem Stand der Technik tun würde. Der erfindungsgemässe Membranschutz 3 ist somit universeller einsetzbar.

In diesem Beispiel der Fig. 5 ist ein Membranschutz 3 mit einer Vielzahl von Öffnungen 5 dargestellt. Natürlich lassen sich die beschriebenen erfindungsgemässen Ausführungsformen beliebig kombinieren und/oder austauschen. So ist ein frontdichtender Sensor nach Fig. 4 auch mit einem Membranschutz 3 mit einer Vielzahl von Öffnungen 5 nach Fig. 3 geeignet, und ein schulterdichtender Sensor 1 nach Fig. 5 ist auch mit einem Membranschutz 3 mit einer zentrale Öffnung 5 nach Fig. 2 geeignet. Zudem lassen sich alle erfindungsgemässen Sensoren 1 prinzipiell mit oder ohne Membranschutz 3 verwenden.

Ein weiterer Vorteil einer Oberflächenbeschichtung des Membranschutzes 3 besteht in den verbesserten Gleiteigenschaften durch die verminderte Reibung zu den an die Membranschutz 3 angrenzenden Teilen, namentlich zur Membrane 2 und zum Einbauteil 10. Dies erhöht die Drehbarkeit des Membranschutzes 3 und verhindert ein Verklemmen beim Ein- und Ausbau in ein Einbauteil 10.

### Bezugszeichenliste

- 1: Sensor
- 2: Membrane
- 3: Membranschutz
- 4: Gewinde
- 5: Öffnungen
- 6: Rille
- 7: Clipsystem, Zähne
- 8: Frontbereich
- 9: Bohrung
- 10: Einbauteil
- 11: Anschlag (dichtend)

## Patentansprüche

1. Sensor (1) zum Einschrauben in eine Bohrung (9) eines Einbauteils (10) mit einer Membrane (2) im Frontbereich (8), umfassend einen Membranschutz (3) der aus einem Material hergestellt ist, das hitzebeständig und geeignet ist für einen Einsatz des Sensors (1) in einem Brennraum; und wobei der Membranschutz (3) aus einem Material besteht, das Temperaturen bis 500°C erträgt; **dadurch gekennzeichnet, dass** der Membranschutz (3) ein Clipsystem (7) aufweist, welches aus elastisch am Membranschutz (3) angebrachten einzelnen Zähnen besteht; dass der Membranschutz (3) mit seinem Clipsystem (7) inwändig am Frontbereich (8) des Sensors (1) angebracht ist; dass der Frontbereich (8) inwändig eine Rille (6) aufweist, zum Eingreifen des Clipsystems (7); dass die Zähne von innen in die Rille (6) eingreifen; und dass der Membranschutz (3) einfach und ohne Werkzeug auf den Frontbereich (8) des Sensors (1) montierbar und wieder demontierbar ist, ohne dass dadurch die Membrane (2) beschädigt wird.

2. Sensor (1) nach Anspruch 1, **dadurch gekennzeichnet, dass** der Durchmesser des Membranschutzes (3) nicht grösser ist als der Durchmesser des Frontbereiches (8) des Sensors (1).

3. Frontdichtender Sensor (1) nach einem der Ansprüche 1 oder 2, **dadurch gekennzeichnet, dass** der Membranschutz (3) im eingebauten Zustand zwischen dem Sensor (1) und dem Einbauteil (10) dichtend geklemmt ist.

4. Sensor (1) nach einem der Ansprüche 1 bis 3, **dadurch gekennzeichnet, dass** der Membranschutz (3) drehbar im Frontbereich (8) des Sensors (1) angebracht ist.

5. Sensor (1) nach einem der Ansprüche 1 bis 3, **dadurch gekennzeichnet, dass** der Membranschutz (3) eine Vielzahl von Öffnungen (5) aufweist, durch die ein Medium mit zu messenden Informationen hindurchtreten kann; und dass der Membranschutz (3) ein Flammschutz ist.

## Claims

1. A sensor (1) adapted to be screwed into a bore (9) of an assembly part (10) having a membrane (2) in the front region (8) thereof comprising a membrane protection (3) made of a material that is heat-resistant and adapted for use of said sensor (1) in a combustion chamber; and wherein said membrane protection (3) consists of a material that tolerates temperatures of up to 500°C; **characterized in that** the membrane protection (3) comprises a clip system (7) consisting of individual teeth elastically attached to the membrane protection (3); said membrane protection (3) being attached by means of its clip system (7) on the inside of the front region (8) of said sensor (1); on the inside of said front region (8) there is provided a groove (6) for engaging the clip system (3); the teeth engage said groove (6) from the inside; and **in that** the membrane protection (3) can be easily mounted on and dismounted from the front region (8) of the sensor (1) without the use of a tool and without damaging the membrane (2).

2. A sensor (1) according to claim 1 **characterized in that** the diameter of the membrane protection (3) does not exceed the diameter of the front region (8) of the sensor (1) .

3. A front-sealing sensor (1) according to any of the claims 1 and 2 **characterized in that,** when mounted, said membrane protection (3) is sealingly fitted between the sensor (1) and the assembly part (10).

4. A sensor (1) according to any of the claims 1 to 3 **characterized in that** the membrane protection (3) is rotably attached in the front region (8) of the sensor (1) .

5. A sensor (1) according to any of the claims 1 to 3 **characterized in that** the membrane protection (3) comprises a plurality of apertures (5) for the passage of a medium with the information to be measured therethrough; and **in that** said membrane protection (3) is a flame protectant.

## Revendications

1. Capteur (1) à visser dans un alésage (9) d'une partie d'assemblage (10) ayant un diaphragme (2) dans une région frontale (8) de celui-ci comprenant une protection pour diaphragme (3) en matériau résistant à la chaleur et adapté en vue d'utiliser ledit capteur (1) dans une chambre de combustion; et dans lequel ladite protection pour diaphragme (3) est fabriquée d'un matériau apte à endurer des températures jusqu'à 500°C **caractérisé en ce que** la protection pour diaphragme (3) est pourvue d'un système de connexion par clip (7) comportant des dents individuelles fixées de manière élastique à la protection pour diaphragme (3); ladite protection pour diaphragme (3) étant montée dans l'intérieur de la partie frontale (8) du capteur (1) à l'aide de son système de connexion par clip (7); la partie frontale (8) est prévue d'une rainure (6) sur sa face intérieure pour encliqueter ledit système de connexion par clip (7); lesdites dents engrènent dans la rainure (6) du côté intérieur; et **en ce que** ladite protection pour diaphragme (3) peut être montée sur et démontée de la région frontale (8) du capteur (1) facilement sans l'aide d'un outil et sans endommager le diaphragme (2).

2. Capteur (1) selon la revendication 1 **caractérisé en ce que** le diamètre de la protection pour diaphragme (3) ne dépasse pas le diamètre de la partie frontale (8) du capteur (1).

3. Capteur à étanchéité frontale (1) selon l'une quelconque des revendications 1 ou 2 **caractérisé en ce que** la protection pour diaphragme (3), à l'état montée, est insérée de manière étanche entre ledit capteur (1) et ladite partie d'assemblage (10).

4. Capteur (1) selon l'une quelconque des revendications 1 à 3 **caractérisé en ce que** la protection pour diaphragme (3) est montée de manière rotative dans la partie frontale (8) du capteur (1).

5. Capteur (1) selon l'une quelconque des revendications 1 à 3 **caractérisé en ce que** la protection pour diaphragme (3) comprend une pluralité d'ouvertures (5) pour le passage d'un milieu avec les informations à mesurer; et **en ce que** ladite protection pour diaphragme (3) est une protection ignifuge.
